# EUROPEAN PATENT APPLICATION

(11) **EP 1 803 380 A2**
(43) Date of publication of application: **04.07.2007**
(21) Application number: 06398012.2
(22) Date of filing: 11.08.2006
(51) Int. Cl.: A47J 31/00

(54) **Ecological device for quick removal and without knocking impact of the spent espresso coffee grounds**

(30) Priority: 12.08.2005 PT 1006705
(71) Applicant: Da Silva Pinto Ferreira, Manuel Antonio, 4400-405 Vila Nova da Gaia (PT); Campos da Costa, Anselmo, 4400-405 Vila Nova da Gaia (PT); Oliveira, Alfredo Fernando do Carmo, 4400 Vila Nova da Gaia (PT)
(72) Inventor: Da Silva Pinto Ferreira, Manuel Antonio, 4400-405 Vila Nova da Gaia (PT); Campos da Costa, Anselmo, 4400-405 Vila Nova da Gaia (PT); Oliveira, Alfredo Fernando do Carmo, 4400 Vila Nova da Gaia (PT)
(74) Representative: Ferreira, Maria Silvina

(57) **Abstract**

The present invention is an innovative device that allows the user to remove, with little effort, in just one quick stage the used coffee grounds from the metallic filter, housed in the portafilter of an espresso machine, after the preparation of a coffee beverage, without the use of an energy source, except from the energy made available by the activity performed by the user, and respecting the environment, due to the absence of disturbing noises and due to the immediate storage of the remainders. The device comprises a tubular body (8) having a fixation support (13), for keeping the body in a vertical position fastened to the fixation base (15). Coupled to the body is a set of detachable components, identified in the figures as collar (1), removable vane (2), rotary head (3), short spring (4), protective sleeve (5), steering sleeve (6), long spring (7), fixation sleeve (9), shaft (10), pin (11) and ring (12).

## Description

### FIELD OF THE INVENTION

The present invention refers to a portable device, for exclusive removal and storage of used coffee grounds, remainders of the preparation of beverages in espresso machines, which should be removed from the portafilter with metallic filter, after obtaining the espresso coffee.

### SUMMARY OF THE INVENTION

The device comprises an innovating set designed for accomplishing, in an advantageous and easy manner, the following relevant functions:
- Complete removal of used coffee grounds from the metallic filter, housed in the portafilter, by means of a rotary movement of a head, adjustable to the internal shape of the coffee filter, initiated by the operation performed by the user;
- Automatic return of the head to the initial position, describing a quick spiral movement, which discards the humid remainders, that eventually adhere to the same, after the removal;
- Transfer by gravity of the removed remainders from the coffee filter, without any contaminants or strange bodies hindering the reuse of the same, into a specific refuse sack, easily detachable and replaceable by the user;
- Compatibility with any portafilter available in the market and respective metallic filters and for immediate use due to easy installation near the coffee machine;
- Manufactured with oxidation free components, easily detachable for appropriate cleaning, where the set is easily mountable, when necessary, after cleaning;
- Easy fixation and removal on any kind of counter or table, assuring the user flexibility, appropriate cleaning and portability of the device.

The present invention is a novel product for the market, offering a distinguishing solution, with undeniable value for the user, establishing a technical progress, which may be immediately produced and commercialized.

### BRIEF DESCRIPTION OF THE FIGURES

The present invention will now be explained in detail with aid from the appended drawings, presented as non-limiting examples, wherein:

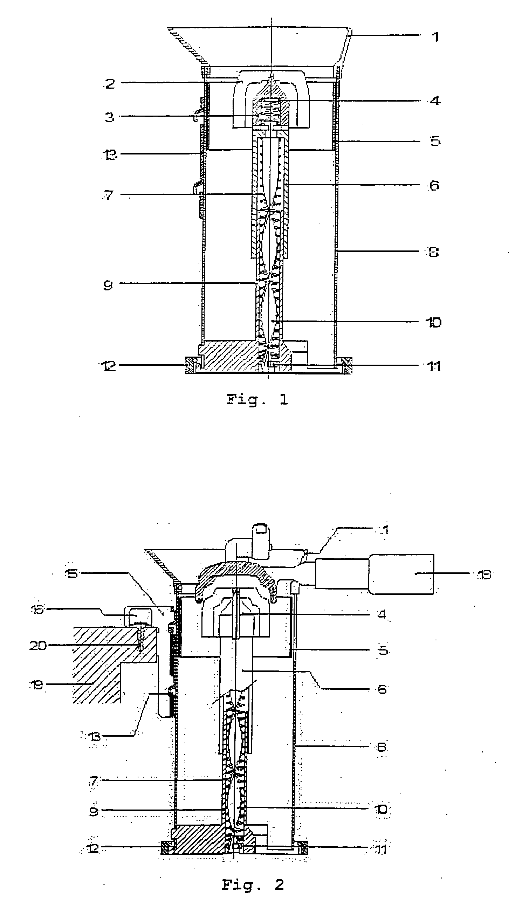

- Fig. 1: shows a longitudinal section view of the device, in the case of not being subjected to the foreseen fixation, representing the tubular body (8), the collar (1), the fixation sleeve (9), the detachable components, in resting position, and the support of the fixation system, welded to the exterior wall of the body;
- Fig. 2: shows a longitudinal section view of the device, in the case of being subjected to the foreseen fixation, representing a simulation of the placing of the portafilter, by a supposed user, over the rotary head (3) of the device to initiate the complete removal of the used coffee grounds from the metallic filter housed in the portafilter;

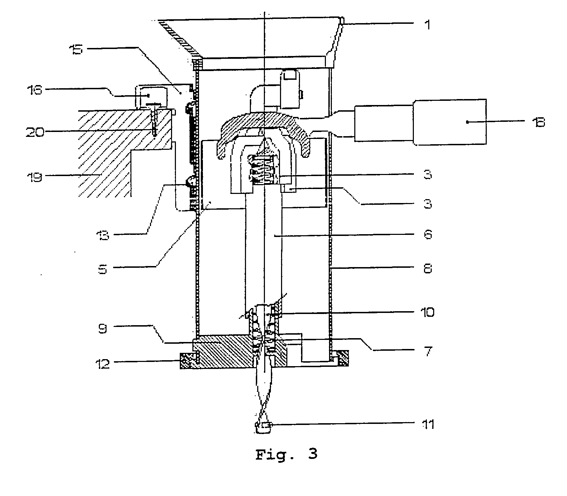

- Fig. 3: shows a longitudinal section view of the device, in the case of being subjected to the foreseen fixation, representing a simulation of the final linear displacement movement of the portafilter, performed by a supposed user, with the rotary head (3) of the device completing the used coffee grounds removal from the metallic filter housed in the portafilter;

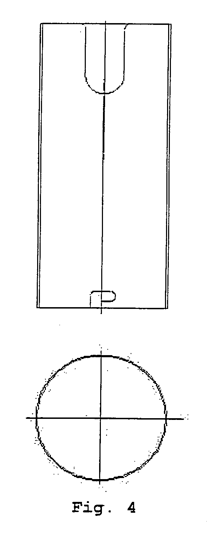

- Fig. 4: comprises two views defining the tubular body (8) of the device;

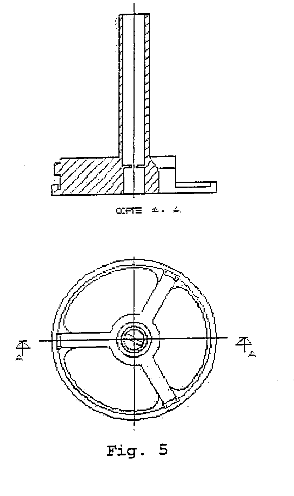

- Fig. 5: comprises two views defining the fixation sleeve (9) of the detachable components of the device;
- Fig. 6: comprises three views defining the rotary head (3) of the device;

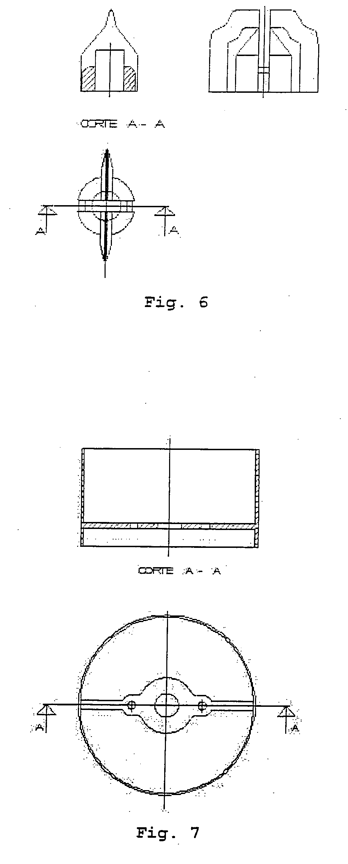

- Fig. 7: comprises two views defining the protective sleeve (5) of the device;

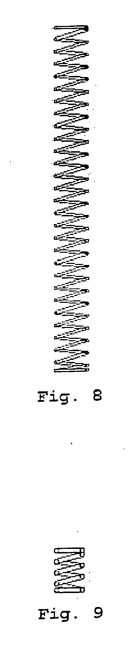

- Fig. 8: and 9 shows the long spring (7) and the short spring (4) of the device;

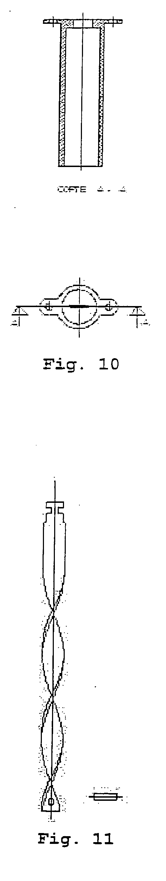

- Fig. 10: comprises two views defining the steering sleeve (6) of the device;
- Fig. 11: comprises a view defining the double-helix shaft (10) of the device and its fixation pin (11);

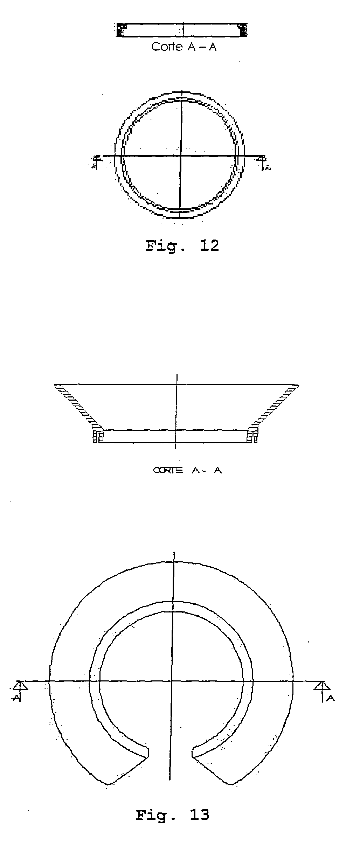

- Fig. 12: comprises two views defining the retainer ring (12) of the device;
- Fig. 13: comprises two views defining the collar (1) of the device;

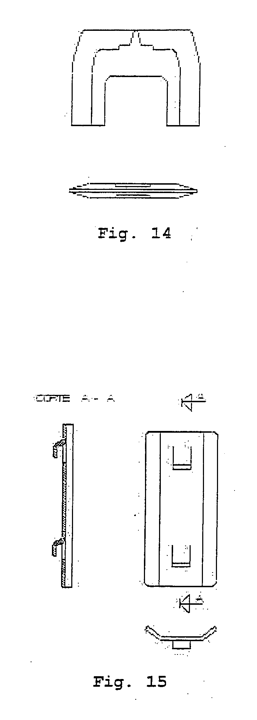

- Fig. 14: comprises two views defining the removable vane (2) of the device;
- Fig. 15: comprises three views defining the fixation support (13) of the device;

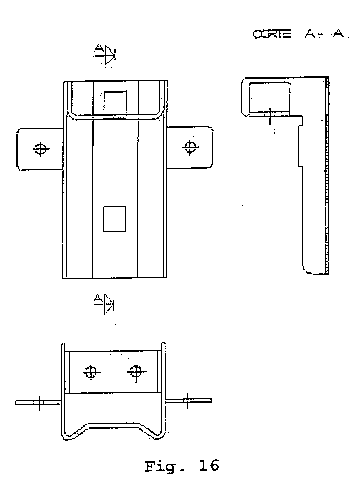

- Fig. 16: comprises three views defining the fixation base (15) of the device.

### DETAILED DESCRIPTION OF THE INVENTION

The device consists of a set of detachable components, manufactured with selected materials, adequate to the intended functionality and reliability for the target user.

The referred set consists of a tubular body (8), assuming a vertical position according to its axis, having on the upper side a collar (1) and on the bottom side a fixation sleeve (9), which supports the device detachable components and which are subsequently mentioned.

The device detachable components are composed of a rotary head (3), a removable vane (2), a protective sleeve (5), a steering sleeve (6), a double-helix shaft (10), a long spring (7), a short spring (4), a pin (11) and a retaining ring (12).

The device presents a fixation system, which assures its use with the tubular body (8) in the vertical position, which is composed of a base, allowing the fixation of the device to a counter or table, and a support welded to the tubular body exterior wall, allowing an easy discard of the tubular body and its detachable components for cleaning.

The device was conceived and tested in order to allow the user an easy and complete removal of used coffee grounds from the metallic filter, housed in the portafilter, after each preparation of an espresso coffee beverage, without the inconvenience of the usual knocking of the portafilter on a fastened knocking bar for extraction of the remainders.

The device was conceived and tested in such a way that the remainders, which are detached during the removal operation of the used coffee grounds, cannot escape to the exterior of the device body, being transported for storage in a refuse sack, fastened by the retaining ring (12) to the bottom part of the device.

The device essential innovation is the accomplishment of the removal of used coffee grounds by means of transforming a linear movement into a rotary movement, without the user inconvenient in obtaining such a result by a knocking impact, with more effort and with the consequent disturbing noise.

## Claims

1. Device for quick removal and without knocking impact of the used espresso coffee grounds, adhering to the metallic filter of the portafilter, **characterized** for allowing the removal operation with the rotary movement of the head (3), to which the removable vane (2) may be coupled, both mounted on the steering sleeve (6), this rotary movement being a result of the exclusive action performed by the user who, when placing the portafilter with the used coffee grounds over the rotary head (3), initiates a linear movement which acts on the double-helix shaft (10), coupled to the steering sleeve (6) and to the rotary head.

2. Device according to previous claim, **characterized by** the double-helix shaft (10), in displacement due to the action performed by the user, crosses the fixation sleeve (9), having a central crack for guiding the displacement of the shaft, which determines the rotation of the shaft (10) and which is transmitted, by coupling to the steering sleeve (6), to the rotary head (3) and to the protective sleeve (5).

3. Device according to previous claims, **characterized by** the steering sleeve (6), in displacement due to the action performed by the user, coupled to the rotary head (3) and to the double-helix shaft (10), compresses the long spring (7) in the housing present in the fixation sleeve (9) and generates energy which unchains, due to the expansion of the long spring (7), the automatic return of all movable elements to the initial position, as soon as the action performed by the user upon the rotary head (3) ceases.

4. Device according to previous claims, **characterized by** establishing, at the time of the automatic return initiated by the expansion of the long spring (7), a quick rotation of the rotary head (3) which allows the elimination of humid remainders adhering to the same or to the removable vane (2), assuring this way the self-cleaning of these components.

5. Device according to previous claims, **characterized by** having a removable vane (2), that when coupled to the rotary head (3) allows removing the used coffee grounds from any metallic filter adapting itself to the configuration of the filter by the action of the short spring (4), housed inside the rotary head (3).

6. Device according to previous claims, **characterized by** having a protective sleeve (5), coupled to the rotary head (3), that comprises a casing for retention and transport of the used coffee grounds, during its removal from the metallic filter by the action of the rotary head (3), avoiding the detached remainders to fall outside the refuse sack fastened by the retaining ring (12).

7. Device according to previous claims, **characterized by** having a retaining ring (12), coupled to the fixation sleeve (9), which allows the easy fixation of a refuse sack for storing the refuses resulting from the removal of the used coffee grounds by the rotary head (3) with the removable vane (2).

8. Device according to previous claims, **characterized by** having a fixation support (13) welded to the tubular body (8), that allows an easy removal of the body, with all detachable components, from the fixation base (15) for partial or thorough cleaning.

9. Device according to previous claims, **characterized by** being composed of components made of stainless steel or polymeric materials, recyclable materials and resistant to corrosion provoked by the used grounds and humid residues of the coffee, easily detachable by the user, without need of universal or specific tools, for a thorough cleaning or washing in a dishwashing machine and also with a quick mounting according to the described conditions.

10. Device according to previous claims, **characterized by** its operation not needing any effort beyond a vertical movement action performed by the user, in a short linear course, which unchains all aforementioned movements and allows the removal of the used coffee grounds from the metallic filter housed in the portafilter in just one quick movement without impact and consequent noise.
